# EUROPEAN PATENT APPLICATION

(11) **EP 2 557 763 A1**
(43) Date of publication of application: **13.02.2013**
(21) Application number: 11177142.4
(22) Date of filing: 10.08.2011
(51) Int. Cl.: H04M 1/725, H04M 1/60

(54) **Remote control of a portable electronic device and method therefor**

(71) Applicant: Research In Motion Limited, Waterloo, ON N2L 3W8 (CA)
(72) Inventor: Bulgin, Scott Edward, Waterloo Ontario N2L 3W8 (CA); McGinn, John Douglas, Waterloo Ontario N2L 3W8 (CA)
(74) Representative: Moore, Barry

(57) **Abstract**

A portable electronic device (100) provides audio output, such as from a media player application (210) controllable by an ultrasonic remote control signal. Audio processing circuitry (200), which is normally configured to process audio signals in the human audible range, is configured by a controller (202) to operate in an ultrasonic signal processing mode to detect an ultrasonic control signal, such as generated by a specialized headset. Such a configuration permits the portable electronic device (100) to process ultrasonic control signals using native audio processing circuitry, without the need to add expensive hardware. The ultrasonic signal processing mode is initiated in response to a detected ultrasonic signal processing condition, such as detection of an active media player application (210) or audio output function.

## Description

The present disclosure relates generally to an electronic device including but not limited to a portable electronic device. More particularly, the present disclosure relates to remote control of a portable electronic device using an auxiliary device, such as a headset.

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, Personal Digital Assistants (PDAs), media players, tablet computers, and laptop computers, with wireless network communications, near-field communications connectivity, or Bluetooth™ capabilities.

Auxiliary devices or accessories, such as headsets or headphones, are commonly used in conjunction with the portable electronic device. Other auxiliary devices include Bluetooth™ devices, external keyboards, external speakers, headsets with an integrated microphone, and other hands-free accessories.

For example, a headset permits a user to listen to audio originating from the portable electronic device by delivering the audio in-ear. The user can thus enjoy music or other audio content, such as a telephone conversation, even in a noisy or crowded environment, such as a bus, train, airport, or other public area. In one implementation, the headset connects to the portable electronic device via an electric cable or cord. In another implementation, the headset connects to the portable electronic device via Bluetooth™ or another wireless communication protocol.

The term "headset" as used herein represents any headset, headphone, ear bud, or other device or apparatus capable of providing audio signals to a user. A headset designed for use with a portable electronic device can include a microphone permitting the user to fully participate in a telephone conversation.

While control of the portable electronic device is provided by controls on the device itself, it can be desirable to provide one or more controls remote from the device.

### GENERAL

A portable electronic device may provide audio output, such as from a media player application controllable by an ultrasonic remote control signal. Audio processing circuitry, which is normally configured to process audio signals in the human audible range, is configured by a controller to operate in an ultrasonic signal processing mode to detect an ultrasonic control signal, such as generated by a specialized headset. Such a configuration permits the portable electronic device to process ultrasonic control signals using native audio processing circuitry, without the need to add expensive hardware. The ultrasonic signal processing mode is initiated in response to a detected ultrasonic signal processing condition, such as detection of an active media player application or other application software or system software having an audio output function.

In the present disclosure, the terms "audible audio signals" and "audio signals in the human audible range" are used interchangeably to describe signals in the range of frequencies that can be heard by a human. This range is usually about 20 Hz to 20 kHz, although this varies from person to person, especially at the high frequency end, where a gradual decline with age is considered normal.

In the present disclosure, the term "ultrasonic control signal" describes an electrical signal or acoustic tone having a frequency outside of the human audible range. The ultrasonic control signal is generated remote from a portable electronic device, is received at the device, and used to control a function of the device, such as an audio output function of, or associated with, a media player application.

The term "audio output function" describes a function that is related to the provision of audio output by the portable electronic device, such as by way of application software or system software. In an embodiment, the audio output function includes a media playback function of a media player application. Examples of the media playback function include volume control, play, stop/pause, advance/reverse, next/previous track, etc.

Some other example implementations of the audio output function in different application software contexts include: a phone application, which can have audio output functions of answering, mute, disconnect, and volume control; a voice activated dialling application, which can have audio output functions of initiating, cancelling, and confirmation; and a text-to-speech application, which can have audio output functions of skipping to next unread email, stop/pause, repeat.

In example implementations relating to system software, the audio output function can comprise an audio output portion of the device's operating system, or an audio output component of system software, that can control the volume of audio output from any running application, or from selected running applications.

In an embodiment, the present disclosure may provide a portable electronic device including an audio port, audio processing circuitry, and a controller. The audio processing circuitry may be configured to process audio signals in the human audible range, and the audio processing circuitry is in electrical communication with the audio port. The controller may be configured to, in response to a detected ultrasonic signal processing condition, enable operation of the audio processing circuitry in an ultrasonic signal processing mode to detect an ultrasonic control signal received via the audio port. The controller may be in electrical communication with the audio processing circuitry.

The controller can be configured to concurrently operate the audio processing circuitry in both the audible audio signal processing mode and in the ultrasonic signal processing mode. The ultrasonic signal processing condition can comprise a remote control condition for an audio output function of a media player application.

The audio port can comprise a headphone jack, and the ultrasonic control signal can be received over a microphone line connected to the headphone jack.

In the ultrasonic signal processing mode, the audio processing circuitry can be configured to process the received ultrasonic signal to determine a corresponding desired control function, and to control system or application software running on the device, such as a media player application, based on the processed ultrasonic control signal.

The audio processing circuitry can comprise: an analog to digital converter (ADC) in electrical communication with the audio port; and a digital signal processor (DSP) in electrical communication with the ADC. In response to detection of the ultrasonic signal processing condition, the ADC and the DSP can be configured by the controller to detect and process ultrasonic control signals above 48 kHz, for example up to about 150 kHz. The device can further comprise a codec (coder/decoder) configured to translate the ultrasonic signal received by the ADC and DSP into a control signal that is recognized by a media player application.

In another embodiment, the present disclosure may provide a method including: operating audio processing circuitry of a portable electronic device in an audible audio signal processing mode; and in response to a detected ultrasonic signal processing condition, enabling operation of the audio processing circuitry in an ultrasonic signal processing mode to detect ultrasonic control signals received via an audio port of the portable electronic device.

The method can include concurrently operating the audio processing circuitry in both the ultrasonic signal processing mode and in the audible audio signal processing mode.

The method can further include detecting the ultrasonic signal processing condition. Detecting the ultrasonic signal processing condition can include detecting a remote control signal for an audio output function of system or application software running on the device, such as a media player application, or detecting that the media player application is in an active state.

The audio port can include a headphone jack, and detecting the ultrasonic signal processing condition can include detecting electrical connection, in the headphone jack, of a headphone including a headphone-mounted remote control. Detecting electrical connection of the headphone can include receiving a remote control identification signal at the headphone jack, where the remote control identification signal can include an ultrasonic signal.

Operating the audio processing circuitry in the ultrasonic signal processing mode can include: processing a received ultrasonic control signal to determine a corresponding desired control function; and controlling the media player application based on the processed ultrasonic control signal.

The audio processing circuitry can include an ADC and a DSP, and the received ultrasonic control signal can be processed using circuitry that is native to the portable electronic device. The method can include: translating, at a codec, the ultrasonic signal received by the ADC and DSP into a control signal that is recognized by an audio player function of the portable electronic device.

In another embodiment, the present disclosure may provide a non-transitory machine-readable memory storing statements and instructions for execution by a processor to perform a method of facilitating user interface navigation as described herein.

In a further embodiment, the present disclosure may provide a method of signal processing in a portable electronic device comprising: processing audio signals in the human audible range, in an audible audio signal processing mode, via audio processing circuitry of the portable electronic device; and processing, in an ultrasonic signal processing mode and via the audio processing circuitry, ultrasonic control signals received via a headphone jack of the portable electronic device, the ultrasonic control signals being generated in response to actuation of a headphone-mounted remote control.

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present disclosure will now be described, by way of example only, with reference to the attached Figures.

Figure 1 is a block diagram of a portable electronic device in accordance with an example embodiment.

Figure 2 is a block diagram of a portable electronic device in accordance with another example embodiment.

Figure 3 is a flowchart illustrating a method of controlling a portable electronic device in accordance with an embodiment of the present disclosure.

### DETAILED DESCRIPTION

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

This disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, PDAs, GPS devices, wirelessly enabled notebook computers, tablet computers, and so forth. The portable electronic device may also be a portable electronic device without wireless communication capabilities, such as a handheld electronic game device, digital photograph album, digital camera, portable media player, or other device.

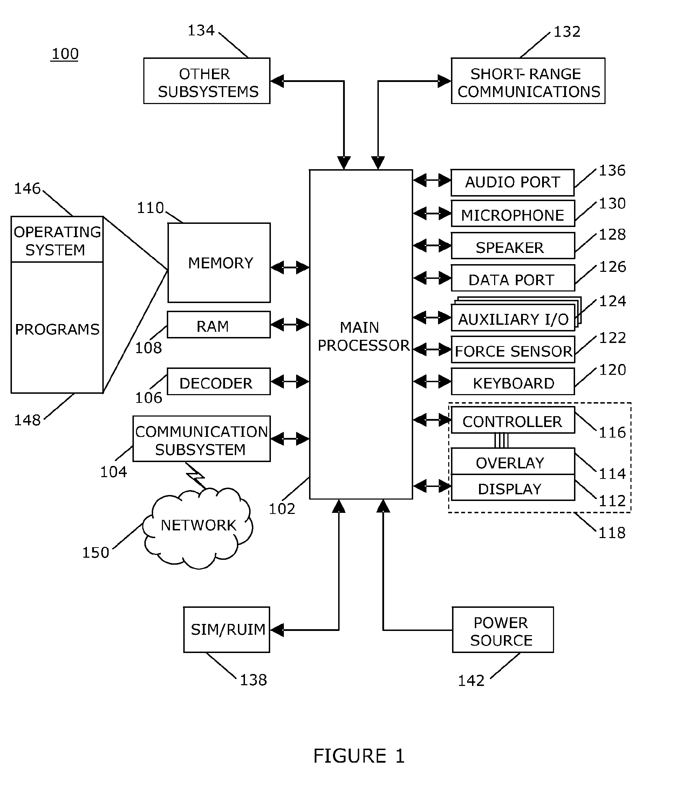

A block diagram of an example of a portable electronic device 100 is shown in Figure 1. The portable electronic device 100 includes multiple components, such as a processor 102 that controls the overall operation of the portable electronic device 100. The portable electronic device 100 presently described optionally includes a communication subsystem 104 and a short-range communications module 132 to perform various communication functions, including data and voice communications. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, an auxiliary input/output (I/O) subsystem 124, a data port 126, a speaker 128, a microphone 130, short-range communications 132, and other device subsystems 134. User-interaction with a graphical user interface presented on the display 112 is performed through the touch-sensitive overlay 114. The memory 110 can include graphics memory accessed by the controller 116 to render graphic content for display on to the display 112. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. A keyboard 120 may be provided in addition to the touch-sensitive display 118, or provided as an alternative in embodiments in which the touch-sensitive overlay 114 and controller 116 are absent from the device. The processor 102 may also interact with one or more force sensors 122 so as to determine, for example, the orientation of the portable electronic device 100.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. The device 100 draws power from power source 142.

For voice communications, the overall operation of the portable electronic device 100 is similar. The speaker 128 outputs audible information converted from electrical signals, and the microphone 130 converts audible information into electrical signals for processing.

When an auxiliary device, such as a headset, is connected to the device 100 via an audio port 136, such as a headphone jack, the device 100 outputs to the headset similar audible information via the audio port 136 as would be output to the speaker 128. In an embodiment, the audio port 136 is a physical socket or other physical interface to which a cord of a headset is physically connected. In another embodiment, the audio port 136 comprises circuitry via which audio can be electromagnetically output to an auxiliary device, such as a Bluetooth™ connection or other wireless connection. In addition to being involved in voice communications, the speaker 128, microphone 130 and audio port 136 can be involved in the function of certain applications or programs 148, such as a media player.

In a further embodiment, the audio port 136 comprises circuitry to transfer signals both to and from the device 100. In an alternative embodiment in which the microphone 130 has a suitable frequency response, the audio port 136 can comprise the microphone 130, the microphone being configured to acoustically detect the ultrasonic control signal. Current microphones on many electronic devices have a poor frequency response above 10 kHz, and would be unsuitable for such acoustic detection.

It is possible to remotely control the operation of the device 100. In the present disclosure, "remote control" means controlling the device 100 using a control that is not on the device itself. Such remote control can be integrated as part of an auxiliary device, such as a headset, or as part of the cable or cord connecting the auxiliary device to the portable electronic device 100. Many known remote control arrangements short circuit a microphone line as a way of implementing a control function, such as muting or ending a call, or playing/pausing a media file being played. Short circuiting, or shorting, the microphone line limits the available functions, as there is limited variation in duration that can be used to distinguish different functions. Enabling extended functionality typically requires the use of specific additional hardware in the device 100.

For example, some specialized headsets include circuitry to generate ultrasonic high frequency tones to control volume up and down, change tracks as well as to pause/play/stop. Some of these known headsets use the ControlTalk™ protocol, in which a series of ultrasonic tones at varying frequencies are configured to correspond to a particular command to be issued to control a portable electronic device. Upon actuation of one or more buttons mounted on the headset, or on the control cord, an ultrasonic tone is generated and transmitted to the portable audio device. Details regarding the generation of the tone are well known to those of ordinary skill in the art. The ultrasonic tone, or ultrasonic control signal, travels through the headset cable, such as along the microphone path, to the portable electronic device where it is detected and processed. The transmission of the ultrasonic tone may be concurrent with any audio content to which a user is listening and the content will not be affected or interrupted because the ultrasonic tones are outside the range of the user's hearing.

Detecting ultrasonic control tones, such as ControlTalk™ tones, typically requires additional hardware on the portable electronic device that the user seeks to control. In fact, many portable electronic devices that are controllable using the ControlTalk™ protocol require additional, dedicated hardware to be added in order to detect and process the signal. If a consumer uses a headset featuring ControlTalk™ tone generators with a portable electronic device that does not support this protocol, some or all of the buttons may not work as the device will be "unaware" of the button actuation.

Embodiments of the present disclosure provide a portable electronic device 100 configured to implement remote control functionality using existing, native device hardware rather than expensive, dedicated circuitry. This provides enhanced compatibility with a greater variety of remote control accessories.

Ultrasonic control protocols, such as the ControlTalk™ protocol, can associate particular functionality with exemplary frequencies such as about 93 kHz, 120 kHz or 260 kHz. However, these specific tones are arbitrarily chosen and, as one of ordinary skill in the art will appreciate, any ultrasonic control signals that are inaudible to the human ear and can be generated in the portable electronic device context, and properly distinguishable from one another, would be suitable.

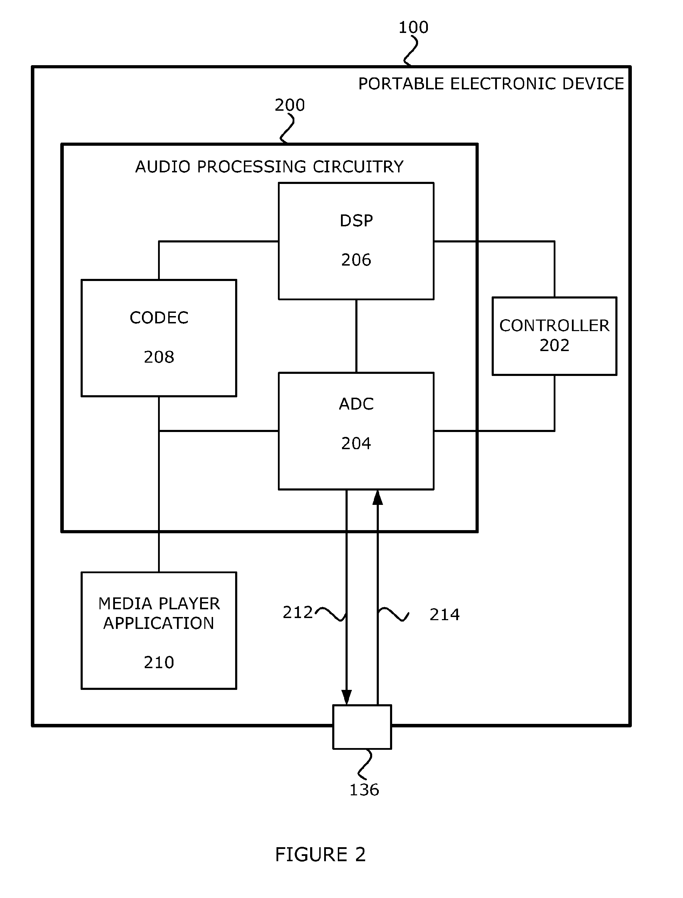

Figure 2 is a block diagram of a portable electronic device in accordance with another example embodiment. As shown in Figure 2, the device 100 has an audio port 136 such as a headphone jack, which is in electrical communication with audio processing circuitry 200 via an audio output line 212 and a microphone line 214. The audio processing circuitry 200 is configured to process audible audio signals. Such processing can include, for example, detection and processing of a telephone conversation being carried out using the device.

A controller 202 is configured to enable operation of the audio processing circuitry 200 in an ultrasonic processing mode to detect ultrasonic control signals received via the audio port 136, such as electrical signals received on the microphone line 214. The controller 202 is also configured to enable the audio processing circuitry 200 to operate in a "normal" or audible audio signal processing mode in which it carries out its other audio processing functions, such as those related to the telephone conversation discussed above, or a media playback function of a media player application 210. In an embodiment, the controller 202 controls the audio circuitry 200 to concurrently operate in both an audible audio signal processing mode and ultrasonic signal processing mode. In an embodiment, the controller 202 is a dedicated audio processing circuitry controller. In another embodiment, the controller 202 is integral with the processor 102 or any other processor or controller native to the portable electronic device 100.

In an example embodiment, the audio processing circuitry 200 comprises an ADC 204 in electrical communication with the audio port 136, and a DSP 206 in electrical communication with the ADC 204. The ADC 204 is capable of receiving an ultrasonic control signal received via the audio port 136, such as on the microphone line 214. The ADC 204 converts the ultrasonic control signal into a digital signal and relays the digital signal to the DSP 206 for processing. The DSP 206, or similar resources within the device 100, is used to measure the frequency of tones recovered by the ADC 204 and to perform functions such as filtering, time duration measurements, signal strength and other checks to ensure valid detection of an intended ultrasonic control signal while rejecting noise which might approximate an ultrasonic audio control signal, or tone.

Known portable electronic devices 100 do not use the audio processing circuitry 200 to detect tones of ultrasonic frequencies. In fact, the use of the audio processing circuitry 200 outside of the audible range runs counter to the original intent of such circuitry. The DSP 206 is, for example, typically used for processing audio such as: suppressing echo; resampling; converting bit streams into baseband audio; etc. Generally, the DSP 206 processes signals within the audible range, for example, frequencies less than about 48 kHz. Known portable electronic devices 100 having hardware such as the ADC 204 or DSP 206 are not configured to detect and process tones in the ultrasonic range, even if they may have such processing capability.

Embodiments of the present disclosure use an existing ADC 204 and DSP 206 on the device 100 to perform ultrasonic control signal detection functionality that would otherwise be performed by dedicated hardware in existing ControlTalk™ approaches. Ultrasonic remote device control is therefore implemented without the necessity of modifying a device's hardware or adding additional circuitry. Using native hardware in this manner permits existing devices having, for example, a 192 kHz ADC to detect ultrasonic control tones with only a software upgrade, or software modification using the controller 202. For example, the built-in ADC 204 and DSP 206 can be used to detect the ultrasonic control signals by simply updating the firmware, operating system or other appropriate software or applications of device 100.

In an example embodiment, the ADC 204 and DSP 206 in the device 100 can detect and process tones above 48 kHz and up to about 150 kHz, which is adequate for most ControlTalk™tones. Although certain implementations of the ControlTalk™ protocol use a header tone of 260 kHz, which would be outside the range of this exemplary ADC, this 260 kHz tone may be ignored as it carries no audio control-related information. Further, ControlTalk™tones tend to have low amplitudes, and the ADC 204 is well suited for detecting such ultrasonic control signals. In other embodiments, an ADC with the ability to process even higher frequency tones, such as up to about 260 kHz and higher, is used.

Referring to the embodiment of Figure 2, on receipt of an ultrasonic control tone, the ADC 204 and the DSP 206 provide a digital signal to codec 208, which, as one of ordinary skill in the art will appreciate, may be either hardware or software capable of encoding and/or decoding the appropriate digital data stream or signals from the ADC 204 and DSP 206. While Figure 2 illustrates functional relationships, in practice the ADC 204 is usually included within the codec 208. Ordinarily, the codec 208 works with audio band signals, or signals in the range audible to humans. Ultrasonic control signals, such as ControlTalk™signals, are intentionally outside of the audible range.

Accordingly, embodiments of the present disclosure configure the codec 208 to operate outside its normal mode of operation, for example at frequencies over 48 kHz. Using the codec 208 for high frequency signals may involve analyzing signals outside of the sampling window that the codec 208 is typically specified to be analyzing. Such modifications may, as noted above, simply be modifications to the device's software, thereby removing the need to adjust hardware components in order to operate with ultrasonic signalling protocols such as ControlTalk™. In an alternate embodiment, a special high frequency ADC, codec, or both can be used. Since embodiments of the present disclosure use the ADC and codec in relation to detecting the presence or absence of know frequencies, fidelity is not an issue and Nyquist sampling criteria is not a necessary condition.

In an embodiment, the codec 208 of the portable electronic device 100 can directly sample any signal up to about 100 kHz without having to compensate for aliasing. In another embodiment, the codec 208 can sample at rates up to 192 kHz. In further embodiments, the codec 208 is able to sample at rates higher than 192 kHz.

The codec 208 can include a "cutoff filter" for removing the aliasing frequencies that would interfere with audible audio signal processing. In an embodiment, the controller 202 modifies the operation of the codec 208 to disable this cutoff filter that is usually intended to reduce or eliminate aliasing. In this manner, the codec 208 is used in a way in which it is not normally intended to be used. In such an embodiment, the codec 208 is configured by the controller 202 to operate in a frequency range that is beyond its intended range of application, and which is typically disabled.

On receipt of a signal from the DSP 206, the codec 208 issues a control signal to a media player application 210 that corresponds to the command issued by the user through pressing a control button on the headset. In an embodiment, the media player application 210 controllable by the ultrasonic control signals is a dedicated media player application, such as an audio player or video player. In another embodiment, the media player application 210 is an audio output portion of the device's operating system, or an audio output control application, that can control the volume of any audio output from any running application, or from selected running applications. In a further embodiment, the control button can put a call on hold, change the volume, mute a call, etc. when the media player application 210 is running, in addition to having other functions when other applications are running.

In an embodiment, the codec 208 stores logic enabling the association of a particular frequency with a control command. In another embodiment, such logic is stored in a computer readable medium that is accessible by the codec 208. In an embodiment, the device 100 can be easily modified via a software modification to detect additional tones that may become available, for example in future releases of ultrasonic control signal systems, such as ControlTalk™.

As such, according to an example embodiment of the present disclosure, the portable electronic device 100 uses native audio processing circuitry such as one or more of an ADC 204, DSP 206, codec 208, to reliably detect ultrasonic control tones without requiring additional hardware. Such ultrasonic control signals can be used to control a media player application 210 from a headset connected to the device 100 via the audio port 136.

In an example embodiment, the present disclosure provides a method of providing remote control signals to a portable electronic device. A battery-operated remote control mounted on the cord of a headphone set emits ultrasonic signals in response to a user's actuation of a button on the remote. The ultrasonic signals, which correspond to a desired control function selected by the user, may travel along the headphone's cord and are detected by the ADC and DSP that are native to the portable electronic device. A codec translates the signals received by the ADC and DSP into control signals that are recognized by the media player application, which executes the function selected by the user. In one embodiment, the control functions include volume control, track control or a play-pause function, and the ultrasonic signals comprise a series of tones such as the ControlTalk™tones used in the Beats™ by Dr. Dre™ headphones sold by Monster™.

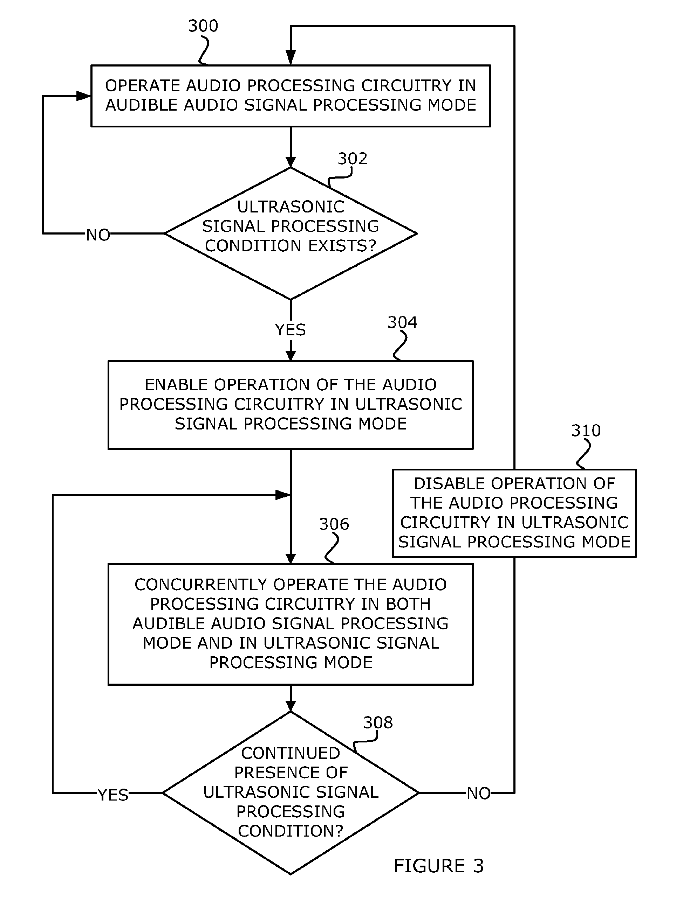

Figure 3 shows a flowchart illustrating a method of controlling a portable electronic device 100 according to an example embodiment. The method is carried out by computer-readable code executed by the controller 202 or by the processor 102, or both. Coding of software for carrying out such a method is within the scope of a person of ordinary skill in the art given the present description. The method may contain additional or fewer processes than shown and/or described, and may be performed in a different order.

Figure 3 illustrates control of the device 100, and in particular its audio processing circuitry 200, in an audible audio signal processing mode and in an ultrasonic signal processing mode in accordance with an embodiment of the present disclosure.

At step 300, the controller 202 operates the audio processing circuitry 200 in an audible audio signal processing mode, which is its normal intended mode of operation. At 302, a determination is made, such as by the controller 202, whether an ultrasonic signal processing condition exists. In an example embodiment, the ultrasonic signal processing condition comprises receipt of an ultrasonic control signal via the audio port 136. In another embodiment, existence of an ultrasonic signal processing condition is determined in response to launching or detecting operation of a media player application 210 or any other application that is controllable using received ultrasonic control signals.

If an ultrasonic signal processing condition does not exist, the controller 202 continues to operate the audio processing circuitry 200 only in the audible audio signal processing mode.

In response to a detected ultrasonic signal processing condition, the method proceeds in step 304 to enable operation of the audio processing circuitry 200 in an ultrasonic signal processing mode. The ultrasonic signal processing mode is a mode in which the audio processing circuitry 200 is not typically intended to operate. In an embodiment, the method includes the actual step of detecting the ultrasonic signal processing condition.

In an embodiment, the controller 202 enables such operation. In an embodiment, the controller 202 is adapted to store known configuration settings applicable to each component of the audio processing circuitry 200 to quickly and easily enable or disable operation in the ultrasonic processing mode. The stored configuration settings can include settings for operation in the ultrasonic mode, settings for operation in the audible audio signal processing mode, or both.

Enabling the operation of the audio processing circuitry 200 in the ultrasonic processing mode can include software modification in one or more of the ADC 204, the DSP 206 and the codec 208, based on the stored configuration settings. For example, in an embodiment, a software modification comprises an instruction set for the ADC 204 to run at the higher rates to detect ultrasonic control signals.

In step 306, the audio processing circuitry 200 concurrently operates in both the audible audio signal processing mode, and in the ultrasonic signal processing mode. The concurrent operation of the audio processing circuitry 200 in both modes ensures that the user's experience of the audio signal, such as listening to audio content from the media player application 210, is not interrupted by actuation of a remote control button, or the processing of an associated ultrasonic control signal.

At step 308, a determination is made, such as by the controller 202, whether there is a continued presence of an ultrasonic signal processing condition. In an embodiment, such a determination can include receipt of further ultrasonic control signals via the audio port 136. In another embodiment, the continued presence of an ultrasonic processing condition is determined upon detection of a particular application running on device 100, such as detecting that a media player application 210 is running.

In some cases, a headset configured to generate ultrasonic control signals can generate an initiation signal when plugged in to the audio port 136. In an embodiment, receipt of such an initiation signal by the audio processing circuitry 200, or by the controller 202, determines the existence of an ultrasonic signal processing condition, or the continued presence of an ultrasonic signal processing condition, or both.

In another embodiment, actuation of an assigned hard or soft key for ultrasonic signal processing, or setting a user preference for ultrasonic signal processing, determines the existence of an ultrasonic signal processing condition, or the continued presence of an ultrasonic signal processing condition, or both.

In the embodiment of Figure 3, as long as step 308 determines there is a continued presence of an ultrasonic signal processing condition, the method continues to perform steep 306. Once a determination is made in step 308 of an absence, or lack of continued presence, of an ultrasonic signal processing condition, in step 310 the ultrasonic signal processing mode is disabled in the audio processing circuitry 200. The method then returns to step 300 in which the audio processing circuitry 200 resumes operation only in the audible audio signal processing mode. This can occur, for example, in response to a user closing a media player application 210.

In an embodiment, step 310 includes associated steps for disabling operation in the ultrasonic signal processing mode of one or more of the ADC 204, DSP 206, and codec 208. Performing step 310 can have numerous advantages, such as allowing audio processing circuitry including the ADC 204 to run at lower rates. This can conserve battery power when the ADC 204 does not need to be "listening" for ultrasonic control signals in situations when there is no running application capable of using them.

In the preceding description, for purposes of explanation, numerous details are set forth in order to provide a thorough understanding of the embodiments. However, it will be apparent to one skilled in the art that these specific details are not required. In other instances, well-known electrical structures and circuits are shown in block diagram form in order not to obscure the understanding. For example, specific details are not provided as to whether the embodiments described herein are implemented as a software routine, hardware circuit, firmware, or a combination thereof.

Embodiments of the disclosure can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A portable electronic device (100) comprising:
an audio port (136);
audio processing circuitry (200) configured to process audio signals in the human audible range, the audio processing circuitry (200) being in electrical communication with the audio port (136); and
a controller (202) configured to, in response to a detected ultrasonic signal processing condition, enable operation of the audio processing circuitry (200) in an ultrasonic signal processing mode to detect an ultrasonic control signal received via the audio port (136), the controller (202) being in electrical communication with the audio processing circuitry (200).

2. The device of claim 1 wherein the controller (202) is configured to concurrently operate the audio processing circuitry (200) in both the audible audio signal processing mode and in the ultrasonic signal processing mode.

3. The device of claim 1 or claim 2 wherein, in the ultrasonic signal processing mode, the audio processing circuitry (200) is configured to process the received ultrasonic signal to determine a corresponding desired control function, and to control a media player application (210) based on the processed ultrasonic control signal.

4. The device of any preceding claim wherein the audio processing circuitry (200) comprises:
an analog to digital converter 'ADC' (204) in electrical communication with the audio port (136); and
a digital signal processor 'DSP' (206) in electrical communication with the ADC (204).

5. The device of claim 4 wherein, in response to detection of the ultrasonic signal processing condition, the ADC (204) and the DSP (206) are configured by the controller to detect and process ultrasonic control signals above 48 kHz.

6. The device of claim 4 or claim 5 wherein, in response to detection of the ultrasonic signal processing condition, the ADC (204) and the DSP (206) are configured by the controller (202) to detect and process ultrasonic control signals up to about 150 kHz.

7. The device of any one of claims 4 to 6 further comprising a codec (208), in electrical communication with the ADC (204) and the DSP (206), the codec (208) configured to translate the ultrasonic signal received by the ADC (204) and DSP (206) into a control signal that is recognized by a media player application (210).

8. A method comprising:
operating audio processing circuitry of a portable electronic device in an audible audio signal processing mode (300); and
in response to a detected ultrasonic signal processing condition, enabling operation of the audio processing circuitry in an ultrasonic signal processing mode to detect ultrasonic control signals received via an audio port of the portable electronic device (304).

9. The method of claim 8 further comprising concurrently operating the audio processing circuitry in both the ultrasonic signal processing mode and in the audible audio signal processing mode (306).

10. The method of claim 8 or claim 9 further comprising detecting the ultrasonic signal processing condition.

11. The method of claim 10 wherein detecting the ultrasonic signal processing condition comprises detecting a remote control signal for an audio output function of application software or system software.

12. The method of claim 11 wherein detecting the ultrasonic signal processing condition comprises detecting that a media player application is in an active state.

13. The method of claim 8 or claim 9 wherein operating the audio processing circuitry in the ultrasonic signal processing mode (304) comprises:
processing a received ultrasonic control signal to determine a corresponding desired control function; and
controlling the media player application based on the processed ultrasonic control signal.

14. The method of claim 13 further comprising translating the received ultrasonic signal into a control signal that is recognized by an audio player function of the portable electronic device.

15. A non-transitory machine-readable memory storing statements and instructions for execution by a processor to perform the method of any one of claims 8 to 14.
